# EUROPÄISCHE PATENTANMELDUNG

(11) **EP 1 690 880 A1**
(43) Veröffentlichungstag der Anmeldung: **16.08.2006**
(21) Anmeldenummer: 05101001.5
(22) Anmeldetag: 11.02.2005
(51) Int. Cl.: C08G 18/32, C08G 18/66, C09J 175/04

(54) **Zweikomponentige Polyurethanzusammensetzungen, insbesondere geeignet für den Einsatz als strukturelle Klebstoffe**

(71) Anmelder: Sika Technology AG, 6340 Baar (CH)
(72) Erfinder: Demmig, Martin Dr., 21037, Hamburg (DE)
(74) Vertreter: Isler, Jörg

(57) **Zusammenfassung**

Die vorliegende Erfindung beschreibt zweikomponentige Polyurethanzusammensetzungen, insbesondere für den Einsatz als strukturelle Klebstoffe, welche aus einer Polyolkomponente **K1** und einer Polyisocyanatkomponente **K2** bestehen, wobei die Polyolkomponente **K1** mindestens ein alkoxyliertes aromatisches Diol **A1** sowie mindestens ein aliphatisches Triol **A2** umfasst und wobei die Polyisocyanatkomponente **K2** mindestens ein Polyisocyanat **B1** umfasst.

## Beschreibung

### Technisches Gebiet

Die Erfindung betrifft das Gebiet der zweikomponentigen Polyurethanzusammensetzungen, insbesondere der strukturellen Zweikomponenten-Polyurethanklebstoffe.

### Stand der Technik

Zweikomponentige Polyurethanklebstoffe auf Basis von Polyolen und Polyisocyanaten werden bereits seit langem eingesetzt. Zweikomponentige Polyurethanklebstoffe haben den Vorteil, dass sie nach dem Mischen schnell aushärten und deshalb bereits nach kurzer Zeit schnell höhere Kräfte aufnehmen können. Für den Einsatz als strukturelle Klebstoffe werden jedoch hohe Ansprüche in Bezug auf Festigkeiten und Klebkräfte an solche Klebstoffe gestellt, da derartige Klebstoffe Elemente von tragenden Strukturen darstellen. Hohe Festigkeiten werden üblicherweise durch hohe Vernetzungsgrade erreicht. Dies wird üblicherweise durch den Einsatz von höherfunktionellen Polyolen oder Polyamine und höher funktionellen Polyisocyanaten erreicht.

So offenbart beispielsweise EP 1 253 159 A1 in den Beispielen einen strukturellen Klebstoff, deren Polyolkomponente eine Mischung eines tetrafunktionellen aliphatischen Polyols sowie eines difunktionellen aliphatischen Polyols umfasst und deren Isocyanatkomponente ein Prepolymer basierend auf Polypropylenglycol und 4,4'-Diphenylmethandiisocyanat, ist.

Allerdings bewirkt ein hoher Einsatz der höherfunktionellen Reaktanden, dass einerseits die Dehnung massiv zurückgeht, wodurch Spannungsspitzen bei Belastungen auftreten und derartige Klebstoffe spröde werden.

Es besteht deshalb der Wunsch nach schnellen Klebstoffen, die hohe Festigkeiten und trotzdem eine hohe Elastizität aufweisen.

### Darstellung der Erfindung

Aufgabe der vorliegenden Erfindung ist es daher, eine zweikomponentige Polyurethanzusammensetzung, insbesondere einen strukturellen zweikomponentigen Polyurethanklebstoff, zur Verfügung zu stellen, der bei hoher Festigkeit gleichzeitig über eine hohe Dehnung verfügt. Dies wird durch die zweikomponentige Polyurethanzusammensetzung gemäss Anspruch 1 ermöglicht.

Erstaunlicherweise wird durch den Zusatz eines alkoxylierten aromatischen Diols zu einem aliphatischen Triols in der Polyolkomponente die Dehnung erhöht, die Festigkeit jedoch nicht erniedrigt.

Die verbesserte Dehnung führt zu einer erhöhten Schlagzähigkeit des ausgehärteten Materials. Ausserdem wurde festgestellt, dass die erfindungsgemässen Zusammensetzung, insbesondere durch die Verwendung eines alkoxylierten aromatischen Diols, eine die Haftung auf metallischen Oberflächen verbessert wird. Schliesslich konnte beobachtet werden, dass sich die erfindungsgemässen Zusammensetzungen durch eine hervorragende Alterungsstabilität, insbesondere gegen Feuchtigkeit und Temperaturwechsel, auszeichnen.

### Wege zur Ausführung der Erfindung

Die vorliegende Erfindung betrifft eine zweikomponentige Polyurethanzusammensetzung, bestehend aus einer Polyolkomponente K1 und einer Polyisocyanatkomponente K2. Die Polyolkomponente K1 umfasst hierbei mindestens ein alkoxyliertes aromatisches Diol A1 sowie mindestens ein aliphatisches Triol A2. Die Polyisocyanatkomponente K2 umfasst mindestens ein Polyisocyanat B1.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Unter einem "aromatischen Diol" wird hier und im folgenden ein Diol verstanden, welches mindestens einen aromatischen Kern und zwei Hydroxylgruppen aufweist. Im Diol können auch mehrere aromatische Kerne vorhanden sein. Vorzugsweise handelt es sich bei den Hydroxylgruppen nicht um phenolische Gruppen, d.h. sie sind vorteilhaft nicht unmittelbar am aromatischen Kern angeordnet.

Der aromatische Kern kann auch kondensiert und/oder eine heteroaromatisch und/oder weitere Substituenten aufweisend sein. In einem heteroaromatischen Kern sind Heteroatome vorhanden, die Teil des aromatischen Rings oder Ringsystems sind.

Beispiele von derartigen aromatischen Kernen sind substituierte Benzol, Naphthalin, Anthracen, Phenanthren, Imidazol, Pyridin, Pyrrol, Pyrimidin, Pyrazin, Chinolin, Phenazin. Beispiele von Diolen mit mehreren aromatischen Kernen sind Diole mit dem Grundgerüst eines Biphenyls, Terphenyls, 2,2'-Bipyridins, Diphenylmethans, 1,1-Diphenylethans oder 2,2-Diphenylpropans.

Besonders geeignet haben sich aromatische Diole gezeigt, die aus Phenol und aus Formaldehyd, Acetaldehyd oder Aceton oder Mischungen daraus hergestellt werden, insbesondere Bisphenol-A, Bisphenol-F oder Bisphenol-A/F.

Vorzugsweise handelt es sich beim alkoxylierten aromatischen Diol A1 um ein ethoxyliertes und/oder propoxyliertes, aromatisches Diol.

Derartige alkoxylierte Diole weisen bevorzugt die Struktur der Formel (I) auf

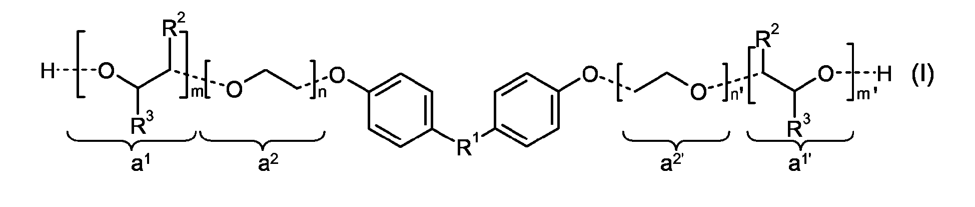

Hierbei stellt der Substituent R¹ eine Gruppe CH₂, CH(CH₃) oder C(CH₃)₂ dar.

Die Indizes n, n', m und m' sind jegliche Werte, derart dass n+n'+m+m' = 1 bis 20, insbesondere n+n'+m+m' = 1 bis 8.

Weiterhin stellen die Substituenten R² und R³ je nachdem R² = H und R³ = Methyl oder R² = Methyl und R³ = H dar.

Die Segmente a¹ und a^{1'} bedeuten einen Oxypropyleneinheit (PO) und a² und a²' eine Oxyethyleneinheit (EO). Die gestrichelten Linien in Formel (I) stellen schematisch, dar, dass die Abfolge der aneinander gebundenen Alkylenglykol-Segmente a¹, a^{1'}, a² und a^{2'} variabel ist. So ist eine blockweise oder eine abwechselnde oder eine zufällige Reihenfolge dieser Oxyalkyleneinheiten möglich. Die Herstellung von derartig alkoxylierten aromatischen Diolen erfolgt auf eine dem Fachmann bekannte Art und Weise.

Es ist dem Fachmann weiterhin klar, dass bei einer Alkoxylierung eines Diols auch durchaus auch Moleküle mit unterschiedlichem Alkoxylierungsgrad in beiden Ketten entstehen können. Weiterhin ist es dem Fachmann auch klar, dass bei Alkoxylierungen stets Verteilungen von unterschiedlichen Molekülen auftreten. Dies zeigt sich in unter anderem auch darin, dass der Totalalkoxylierungsgrad ("*TAG*" = n+n'+m+m') auch ungeradzahlig oder einen nicht-ganzzahligen Wert annehmen kann.

Rein propoxylierte aromatische Diole der Formel (I) sind gegenüber rein ethoxylierten oder EO/PO-gemischt alkoxylierten aromatischen Diolen der Formel (I) bevorzugt, d.h. n ist bevorzugt = n'=0.

Besonders bevorzugt ist das aromatischen Diol **A1** ein Diol der Formel (I) mit R¹ = CH₂ oder C(CH₃)₂ H, insbesondere C(CH₃)₂.

Als meist bevorzugt gezeigt haben sich aromatische Diole **A1** der Formel (I) mit R¹ = C(CH₃)₂, n=n'=0 und mit einem Totalalkoxylierungsgrad zwischen 2 und 16.

Es kann vorteilhaft sein, dass die zweikomponentige Polyurethanzusammensetzung auch Mischungen unterschiedlicher aromatischen Diole **A1** enthält.

Das aromatische Diol **A1** wird bevorzugt in einer Menge von 2 bis 10 Gew.-%, bezogen auf die gesamte Zusammensetzung, eingesetzt.

Beim aliphatischen Triol **A2** handelt es sich um ein aliphatisches Triol mit einem Molekulargewicht von 360 bis 6000 g/mol, entsprechend einem OH-Equivalenzgewicht von 120 bis 2000, insbesondere einem Molekulargewicht von 120 bis 2000 g/mol, bevorzugt von 160 bis 1700 g/mol.

Es gibt unterschiedliche Arten von derartigen aliphatischen Triolen. So können sie beispielsweise Urethan- und/oder Harnstoff- und/oder Ethergruppen enthalten. Die Gestalt der Triole kann sehr unterschiedlich sein. So sind beispielsweise sternförmige oder kammförmige Triole möglich. Es ist weiterhin möglich, dass im Triol sowohl primäre als auch sekundäre Hydroxylgruppen vorhanden sind. Bevorzugt sind alle drei Hydroxylgruppen primäre Hydroxylgruppen.

Beispielsweise lassen sich aliphatischen Triole **A2** aus einem aliphatischen Triisocyanat, insbesondere aus einem Isocyanurat, welches aus drei Diisocyanat-Molekülen gebildet wird, im Überschuss von aliphatischen Diolen, insbesondere von Polyetherdiolen, gegebenenfalls durch weitere Nachverlängerung mittels aliphatischen Diisocyanaten und aliphatischen Diolen, erreichen.

Weitere beispielhafte aliphatischen Triole **A2** können aus niedermolekularen aliphatischen Triolen, wie zum Beispiel Trimethylolpropan oder Glycerin, und einem aliphatischen Diisocyanat und nachfolgender Reaktion mit einem aliphatischen Diol erhalten werden.

Weiterhin beispielhafte aliphatischen Triole **A2** sind Produkte einer Alkoxylierungsreaktion von niedermolekularen aliphatischen Triolen, wie zum Beispiel Trimethylolpropan oder Glycerin. Besonders handelt es sich hierbei um ethoxylierte, oder propoxylierte oder butoxylierte aliphatische Triole, insbesondere von Trimethylolpropan oder Glycerin.

Es kann vorteilhaft sein, dass die zweikomponentige Polyurethanzusammensetzung auch Mischungen unterschiedlicher aliphatischer Triole **A2** enthält. Insbesondere hat sich als vorteilhaft gezeigt, dass Mischungen eines aliphatischen Triols **A2** mit einem tieferen Molekulargewicht, insbesondere zwischen 360 und 2700 g/mol, mit einem aliphatischen Triol **A2** mit einem höheren Molekulargewicht, insbesondere zwischen 4200 und 6000 g/mol, eingesetzt werden.

Wenn lediglich ein aliphatischen Triol **A2** eingesetzt wird, ist es von Vorteil ein solches mit einem mittleren Molekulargewicht, insbesondere zwischen 2000 und 4000 g/mol, zu wählen.

Das Gewichtsverhältnis **A1/A2** von aromatischem Diol **A1** und aliphatischen Triol **A2** beträgt vorzugsweise zwischen 0.05 und 0.3 beträgt.

Weiterhin kann die Polyolkomponente **K1** noch andere Bestandteile umfassen. Vorteilhaft werden Aushärtungskatalysatoren eingesetzt. Derartige Katalysatoren sind dem Fachmann für die Reaktion von Polyisocyanaten mit Polyolen, gegebenenfalls auch für mit Polyaminen oder Wasser, bekannt. Als Beispiele für derartige Katalysatoren seien Zinn-, Zink- und Wismut-organische Metallkatalysatoren, z.B. Dibutylzinndilaurat, oder tertiäre Amine, z.B. 1,4-Diazobicyclo[2.2.2]octan (DABCO), erwähnt.

Als zusätzliche Bestandteile können weiterhin Diole, insbesondere Polyoxyalkylendiolen, und/oder Diamine sein. Als Amine sind insbesondere aliphatische, araliphatische, cycloaliphatische sowie toxikologisch unbedenkliche aromatische Amine geeignet. Durch die Auswahl und Konzentration von geeigneten Aminen sowie Katalysatoren kann die Topfzeit und das Härtungsverhalten sowie das Abrutschverhalten vorteilhaft beeinflusst werden.

Die Polyisocyanatkomponente **K2** umfasst mindestens ein Polyisocyanat **B1.**

Als Polyisocyanat **B1** besonders geeignet sind einerseits Polyisocyanate **B1',** die neben zwei oder mehreren freien Isocyanat-Gruppen mindestens eine Harnstoff- oder eine Urethan- oder eine Biuret- oder eine Urethdiongruppe aufweisen. Insbesondere eigenen sich auf aromatischen Polyisocyanaten, insbesondere auf Diphenylmethandiisocyanat (2,4'- und/oder 4,4'-MDI), -basierende Polyisocyanate. Als besonders geeignet haben einerseits Polyisocyanate vom Typ, wie sie kommerziell als Desmodur® VH 20 von Bayer erhältlich sind, gezeigt. Weiterhin geeignete Polyisocyanate **B1'** sind sind Isocyanurate oder Biurete eines Diisocyanates, insbesondere von HDI und/oder IPDI und/oder TDI.

Es ist durchaus möglich, dass Mischungen von Polyisocyanaten **B1'** eingesetzt werden. In einer bevorzugten Ausführungsform wird eine Polyisocyanate **B1'** Mischung vom Typ des Desmodur® VH 20 mit einem HDI-Isocyanurat eingesetzt.

Andererseits als Polyisocyanat **B1** besonders geeignet haben sich Polyurethanprepolymere **B1",** welche mindestens zwei Isocyanat-Gruppen aufweisen, und welche aus einer Reaktion von mindestens einem Polyisocyanat mit einem Molekulargewicht von kleiner als 300 g/Mol, insbesondere von zwischen 150 g/Mol und 270 g/Mol, mit mindestens einem Polyol **AB1** gebildet werden. Als Polyol **AB1** sind insbesondere Polyole geeignet, welche ausgewählt sind aus der Gruppe umfassend Polyetherpolyole, Polyesterpolyole, Polycarbonatpolyole, Polyole gebildet aus ungesättigten Monomeren und deren Mischungen. Die Herstellungsweise derartiger Isocyanat-Gruppen aufweisender Polyurethanprepolymer erfolgt in bekannter Art und Weise und erfolgt typischerweise im stöchiometrischen Überschuss des Polyisocyanates gegenüber des Polyols. Als hierfür eingesetzte Polyisocyanate sind insbesondere 2,4- und 2,6-Toluylendiisocyanat (TDI), 2,4'- und 4,4'-Diphenylmethandiisocyanat (MDI), 1,6-Hexamethylendiisocyanat (HDI) sowie deren Isomerengemische und Mischungen untereinander. Besonders bevorzugt gilt MDI.

Als Polyetherpolyole, auch Polyoxyalkylenpolyole genannt, gelten Polymerisationsprodukte von Ethylenoxid, 1,2-Propylenoxid, 1,2- oder 2,3-Butylenoxid, Tetrahydrouran oder Mischungen davon, gegebenenfalls sind sie polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2-und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten.

Besonders geeignet sind Polyoxyalkylendiole oder Polyoxyalkylentriole, insbesondere Polyoxypropylendiole oder Polyoxypropylentriole.

Acclaim-Typen Speziell geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxypropylendiole und -triole mit einem Molekulargewicht von 400 bis 8'000 g/mol. Unter "Molekulargewicht" oder "Molgewicht" versteht man im vorliegenden Dokument stets das Molekulargewichtsmittel Mₙ.

Ebenfalls besonders geeignet sind sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.

Als Polyesterpolyole gelten insbesondere Polyole, welche beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, werden sowie Polyesterpolyole aus Lactonen, wie beispielsweise ε-Caprolacton.

Als Polycarbonatpolyole sind insbesondere solche bevorzugt, welche durch Umsetzung der oben genannten - zum Aufbau der Polyesterpolyole eingesetzten - Alkohole mit Dialkylcarbonaten, Diarylcarbonaten oder Phosgen zugänglich sind.

Als "Polyole gebildet aus ungesättigten Monomeren" sind insbesondere derartige Polyole zu verstehen, welche aus der Polymerisation von mindestens einem der Monomere ausgewählt aus der Gruppe umfassend Ethylen, Propylen, Butylen, Butadien, Isopren, Styrol, Vinylalkohol, Vinylether, Vinylester, Acrylonitril, Säuren, Amide und Ester der Acrylsäure, Methacrylsäure, Maleinsäure, Fumarsäure, Crotonsäure und Itaconsäure sowie deren Mischungen.

Als besonders geeignete Polyole gebildet aus ungesättigten Monomere gelten hydroxyfunktionelle Polybutadiene wie Polybutadienpolyole und hydrierte Polybutadienpolyole, sowie Poly(meth)acrylatpolyole. Unter "(Meth)acrylat" werden hier und im Folgenden des vorliegenden Dokuments stets Ester sowohl der Acrylsäure als auch der Methacrylsäure verstanden. Ebenso bezeichnet "(Meth)acrylsäure" sowohl Acrylsäure als auch Methacrylsäure.

Als "Poly(meth)acrylatpolyole" werden hierbei Polymere verstanden, welche Copolymere eines hydroxy-funktionellen (Meth)acrylsäureesters und mindestens eines weiteren Monomers, welches ausgewählt ist aus der Gruppe umfassend die Monomere Acrylsäure, Methacrylsäure, C₁-C₁₈-Alkylester der Acrylsäure oder Methacrylsäure, Styrol, Vinylester und Vinylalkohol. Als hydroxy-funktioneller (Meth)acrylsäureester werden bevorzugt Hydroxyethyl-(meth)acrylat, Hydroxypropyl(meth)acrylat und Hydroxybutyl(meth)acrylat.

Diese genannten Polyole AB1 weisen bevorzugt ein mittleres Molekulargewicht von 250 bis 30'000 g/mol, insbesondere von 1'000 bis 8'000 g/mol, und sind bevorzugt Diole oder Triole, insbesondere mit einer mittleren OH-Funktionalität im Bereich von 1.6 bis 3.

In einer bevorzugten Ausführungsform wird eine Mischung von Polyolen **AB1** eingesetzt, die eine Mischung von Diolen und Triolen ist.

In einer Ausführungsform der Erfindung umfasst die Polyisocyanatkomponente **K2** mindestens ein Polyisocyanat **B1'** und mindestens ein Polyisocyanat Polyurethanprepolymer **B1".**

Beide Komponenten **K1** und **K2** können neben den bereits erwähnten weitere Bestandteile, wie sie der Fachmann aus der Zweikomponenten-Polyurethanchemie her kennt, aufweisen. Diese können in nur einer Komponente oder in beiden vorhanden sein. Als derartig zusätzliche Bestandteile werden beispielsweise Lösungsmittel, Weichmacher und/oder Extender Füllstoffe, wie Russe, Kreiden oder Talke, Haftvermittler, insbesondere Trialkoxysilane, sowie Thixotropiermittel, wie amorphe Kieselsäuren, Zeolithe eingesetzt.

Wie der Fachmann für Polyurethanklebstoffe weiss, muss bei der Herstellung der Komponenten, insbesondere bei der Polyisocyanatkomponente K2, darauf geachtet werden, dass die Rohstoffe möglichst frei sind von Wasser sind und dass während und nach deren Herstellung möglichst keine Feuchtigkeit in Kontakt mit der Komponente treten kann. Dies wird einerseits durch ein physikalisches oder chemisches Trocknen der Ausgangssubstanzen sowie durch das Arbeiten unter Inertgas, üblicherweise Stickstoff, erreicht.

Die Komponenten **K1** und **K2** werden vorteilhaft derart formuliert, dass das Volumenverhältnis von Komponente **K1** und **K2** zwischen 1:3 und 3:1, insbesondere zwischen 1:2 und 2:1, beträgt. Besonders bevorzugt beträgt dieses Verhältnis in etwa 1:1. Das Mischverhältnis ist vorzugsweise derart, dass die NCO-Gruppen der Komponente **K2** stöchiometrisch zu den NCOreaktiven Gruppen, typischerweise OH-Gruppen, der Komponente **K1** erfolgt. Erfolgt die Mischung nicht im wesentlichen stöchiometrisch, d.h. mit Abweichungen von mehr als 5%, erfolgt die Reaktion der Komponenten **K1** und **K2** nicht optimal, was zu einer Reduktion in den mechanischen Eigenschaften der ausgehärteten Polyurethanzusammensetzung führt. Dies trifft vor allem für einen Überschuss der Polyolkomponente zu. Bei einem Überschuss von Polyisocyanat ist dies zwar grundsätzlich ebenfalls nachteilig, aber durch die nachträgliche Reaktion der nicht umgesetzten Isocyanat-Gruppen mit Feuchtigkeit, beispielsweise von der Luftfeuchtigkeit herrührend, welche gegebenenfalls zu weiteren Vernetzungen führen kann, kann die verschlechterte Mechanik zumindest teilweise geheilt werden.

Die Komponenten **K1** und **K2** werden vor der Anwendung getrennt von einander gelagert und erst bei oder unmittelbar vor der Anwendung miteinander gemischt. Die Komponenten sind vorteilhaft in einer Verpackung, welche aus zwei von einander getrennten Kammern besteht, vorhanden und zwar derart, dass die Polyolkomponente **K1** in der einen Kammer und die Polyisocyanatkomponente **K2** in der anderen Kammer vorhanden ist. Die Komponenten **K1** und **K2** werden in die Kammern der Verpackung eingefüllt und luft- und feuchtigkeitsdicht verschlossen.

Bevorzugte derartige Packung sind einerseits side-by-side Doppelkartuschen oder Koaxialkartuschen, bei denen zwei röhrenförmige Kammern nebeneinander oder ineinander angeordnet sind und mit Kolben luft- und feuchtigkeitsdicht verschlossen sind. Über den Vortrieb dieser Kolben können die Komponenten aus der Kartusche ausgepresst werden. Die den Kolben entgegengesetzten Seiten der Rohre sind, gegebenenfalls über einen Adapter, derart modifiziert, dass die Kammernöffnungen im Bereich der Öffnung über eine Trennwand miteinander direkt verbunden sind. Vorteilhaft ist im Bereich der Austrittsöffnung der Kammern ein Gewinde angebracht, so dass ein Statikmischer oder ein dynamischer Mischer dicht angebracht werden kann. Derartige Packungen werden insbesondere für Kleinanwendungen bevorzugt, insbesondere für Füllmengen bis 1 Liter.

Für grössere Anwendungen, insbesondere für Anwendungen in der industriellen Fertigung, werden die Komponenten **K1** und **K2** vorteilhaft in Fässer oder Hobbocks abgefüllt und gelagert. In diesem Falle werden die Komponenten über hydraulische Pressen, insbesondere über Folgeplatten, ausgepresst und über Leitungen einer Mischapparatur, wie sie üblich für Zwei-Komponentenklebstoffe in der industriellen Fertigung üblich eingesetzt werden, zugeführt.

Bei jeglicher Packung ist es wichtig, dass zumindest die Polyisocyanatkomponente **K2** luft- und feuchtigkeitsdicht verschlossen ist, so dass beide Komponenten über lange Zeit, d.h. typischerweise länger als 6 Monate, lagerfähig sind

Das Verfahren der Verklebung umfasst die folgenden Schritte:
- Mischen der vorgängig beschriebenen Komponenten **K1** und **K2,**
- Applizieren der gemischten Polyurethanzusammensetzung auf mindestens einer der zu verklebenden Substratoberfläche,
- Fügen innerhalb der Offenzeit
- Aushärten der Polyurethanzusammensetzung.

Das Mischen erfolgt typischerweise über Statikmischer oder mit Hilfe von dynamischen Mischern. Beim Mischen ist darauf zu achten, dass die zwei Komponenten möglichst homogen gemischt werden. Werden die zwei Komponenten schlecht gemischt, treten lokale Abweichungen von dem optimalen Mischungsverhältnis, d.h. im wesentlichen stöchiometrisch, auf, was sich in einer Verschlechterung der mechanischen Eigenschaften der ausgehärteten Polyurethanzusammensetzung auswirkt. Um die Mischqualität auch visuell zu beurteilen, ist es von Vorteil, wenn die zwei Komponenten **K1** und K2 zwei verschiedene Farben aufweisen, die untereinander, aber auch von der Mischung, visuell gut voneinander unterschieden werden können. Ein Beispiel für eine derartige Farbkombination liegt vor, wenn die eine Komponente schwarz und die andere weiss ist. Eine gute Mischung liegt, dann vor, wenn eine homogene graue Farbe vorliegt und keinerlei Streifen oder Muster in Hell- oder Dunkelgrau oder weiss oder schwarz vorliegen.

Die gemischte Polyurethanzusammensetzung wird auf mindestens einer der zu verklebenden Substratoberfläche appliziert. Das zu verklebende Substrat ist vorzugsweise ein Metall, ein Kunststoff, ein Glas oder eine Keramik ist. Typischerweise sind zwei Substrate vorhanden, welche verklebt werden sollen. Es ist möglich, dass der Fügepartner, d.h. das zweite Substrat, identisch oder unterschiedlich vom ersten Substrat ist. Der Klebstoffauftrag kann auf dem ersten und/oder dem zweiten Fügepartner erfolgen. Nach dem Klebstoffauftrag werden die Fügepartner innerhalb der Offenzeit gefügt. Anschliessend an das Fügen erfolgt die Aushärtung der Polyurethanzusammensetzung.

Somit entsteht ein Verbund der Fügepartner, wobei der Klebstoff diese Fügepartner kraftschlüssig miteinander verbindet.

Die Polyurethanzusammensetzung wird vorzugsweise als struktureller Klebstoff eingesetzt. Typische Bespiele für Anwendungen derartiger Klebstoffe finden sich im Bauwerken, Automobilen, Fahrzeugen oder Schiffen. Hierbei ist der ausgehärtete Klebstoff ein Teil einer tragenden Struktur und bildet somit ein wichtiges Bindeglied, an dessen mechanischen Eigenschaften hohe Ansprüche gestellt werden. Die vorliegende Erfindung erfüllt diese hohen Ansprüche bestens.

Weiterhin zeigt die erfindungsgemässe Klebstoffzusammensetzung durch die hohe Dehnung hohe Schlagzähigkeit und ausserdem eine hervorragende Alterungsstabilität, insbesondere gegen Feuchtigkeit und Temperaturwechsel. Ausserdem wurde festgestellt, dass die erfindungsgemässen Zusammensetzung, insbesondere durch die Verwendung eines alkoxylierten aromatischen Diols, eine die Haftung auf metallischen Oberflächen verbessert wird.

### Beispiele

### Herstellung

Die in Tabelle 1 beispielhaft angeführten Zusammensetzungen ***Ex1*** und ***Ex2*** sowie ***Ref. 1*** als Referenzbeispiel weisen alle dieselbe Komponente K2 auf.

Zur Herstellung der Komponenten **K1, *Ex41*** und ***ExA2*** sowie der Referenzkomponente ***RefA.* 1,** wurde die Polyolmischung in einem Vakuumdissolver vorgelegt und nach Zugabe von Katalysator und Trocknungsmittel unter Ausschluss von Feuchtigkeit während 20 Minuten bei 25°C gerührt. Anschliessend wurden diese Polypolkomponenten **K1** in eine Kammer einer side-by-side Doppelkartusche (vol./vol=1:1) aus Polypropylen abgefüllt und luft- und feuchtigkeitsdicht mit Kunststoffkolben verschlossen.

Bei Komponente **K2** wurde getrocknete Kreide dem Polyisocyanat zugegeben und unter Rühren und unter Vakuum homogen bei 25°C in einem Vakuumdissolver während 20 Minuten eingearbeitet. Anschliessend wurde diese Polyisocyanatkomponente **K2** in die zweite Kammer der oben genannten side-by-side Doppelkartusche abgefüllt und ebenfalls luft- und feuchtigkeitsdicht mit Kunststoffkolben verschlossen.

Komponenten **K1** und **K2** wurden in der in Tabelle 1 angegebenen Menge mittels Statikmischer volumetrisch 1:1 vermischt.

### Messungen

Die gemischten Komponenten K1 und K2 wurden in Hantelformel gemäss gemäss ISO 527, Teil 2, 1B gegeben und während 24 h bei 25°C und anschliessend während 3h bei 105°C gehärtet. Nach einer Konditionierungszeit von 24h bei 25°C wurden E-Modul, Zugfestigkeit und Dehnung der so hergestellten Probekörpern gemäss ISO 527 auf einer Zwick Z020 Zugprüfmaschine bei einer Prüftemperatur von 20°C und einer Prüfgeschwindigkeit 50 mm/min gemessen.

**Tabelle 1. Zusammensetzungen und Messresultate**

| **Beispiele** | | | ***Ref.1*** | ***Ex1*** | ***Ex2*** |
|---|---|---|---|---|---|
| Komponente **K1** | | | ***RefA.1*** (Gew.-%) | ***ExA1*** (Gew.-%) | ***ExA2*** (Gew.-%) |
| | Polyethertriol OH-Equivalenzgewicht 146 g Hydroxylzahl 385 mg KOH/g | **A2** | 47.5 | 40.0 | 30 |
| | Polypropylenethertriol OH-Equivalenzgewicht 1600 g Hydroxylzahl 35 mg KOH/g | **A2** | 47.5 | 45.0 | 45.0 |
| | Propoxyliertes Bisphenol-A *(TAG=3)* | **A1** | 0 | 10 | 20 |
| | DABCO | | 0.2 | 0.2 | 0.2 |
| | Zeolith (Trocknungsmittel) | | 4.8 | 4.8 | 4.8 |
| **A1/A2** | | | 0 | 0.118 | 0.267 |
| | | | | | |

| Komponente **K2** | | | (Gew.-%) | (Gew.-%) | (Gew.-%) |
|---|---|---|---|---|---|
| | Desmodur® VH 20 | **B1** | 48.0 | 48.0 | 48.0 |
| | Kreide | | 52.0 | 52.0 | 52.0 |
| | | | | | |
| **K2/K1 (w/w)** | | | 1.274 | 1.2643 | 1.1988 |
| | | | | | |
| E-Modul [MPa] | | | 1200 | 1415 | 1583 |
| Zugfestigkeit [MPa] | | | 21 | 23 | 25 |
| Bruchdehnung [%] | | | 45 | 53 | 47 |

Es ist aus den Resultaten ersichtlich, dass die Bespiele ***Ex1*** und ***Ex2*** gegenüber ***Ref.1*** bei höherer Zugfestigkeit auch höhere Bruchdehnung aufweisen.

## Patentansprüche

1. Zweikomponentige Polyurethanzusammensetzung bestehend aus einer Polyolkomponente **K1** und einer Polyisocyanatkomponente **K2;**
wobei die Polyolkomponente **K1**
mindestens ein alkoxyliertes aromatisches Diol **A1**
sowie mindestens ein aliphatisches Triol **A2**
umfasst,
und wobei die Polyisocyanatkomponente **K2**
mindestens ein Polyisocyanat **B1**
umfasst.

2. Zweikomponentige Polyurethanzusammensetzung gemäss Anspruch 1, **dadurch gekennzeichnet, dass** das Polyisocyanat B1 ein Polyisocyanat **B1'** ist und welches neben zwei oder mehreren freien Isocyanat-Gruppen mindestens eine Harnstoff- oder eine Urethan- oder eine Biuret- oder eine Urethdiongruppe aufweist.

3. Zweikomponentige Polyurethanzusammensetzung gemäss Anspruch 2, **dadurch gekennzeichnet, dass** das Polyisocyanat B1' ein Isocyanurat oder Biuret eines Diisocyanates, insbesondere von HDI und/oder IPDI und/oder TDI, ist.

4. Zweikomponentige Polyurethanzusammensetzung gemäss Anspruch 1, **dadurch gekennzeichnet, dass** das Polyisocyanat B1 ein Polyurethanprepolymer **B1"** ist, welches mindestens zwei Isocyanat-Gruppen aufweist, und welches aus einer Reaktion von mindestens einem Polyisocyanat mit einem Molekulargewicht von kleiner als 300 g/Mol, insbesondere von zwischen 150 g/Mol und 270 g/Mol, mit mindestens einem Polyol AB1 hergestellt wird.

5. Zweikomponentige Polyurethanzusammensetzung gemäss Anspruch 4, **dadurch gekennzeichnet, dass** das Polyisocyanat mit einem Molekulargewicht von kleiner als 300 g/mol MDI, HDI oder TDI, insbesondere MDI, ist.

6. Zweikomponentige Polyurethanzusammensetzung gemäss einer der vorhergehenden Ansprüche, **dadurch gekennzeichnet, dass** die Zusammensetzung mindestens ein Polyisocyanat **B1',** wie in Anspruch 2 oder 3 beschrieben, sowie mindestens ein Polyurethanprepolymer B1", wie in Anspruch 4 oder 5 beschrieben, enthalten.

7. Zweikomponentige Polyurethanzusammensetzung gemäss einer der vorhergehenden Ansprüche, **dadurch gekennzeichnet, dass** das alkoxylierte aromatische Diol **A1** ein ethoxyliertes und/oder ein propoxyliertes aromatisches Diol ist.

8. Zweikomponentige Polyurethanzusammensetzung gemäss Anspruch 7, **dadurch gekennzeichnet, dass** das die Formel (I) aufweist 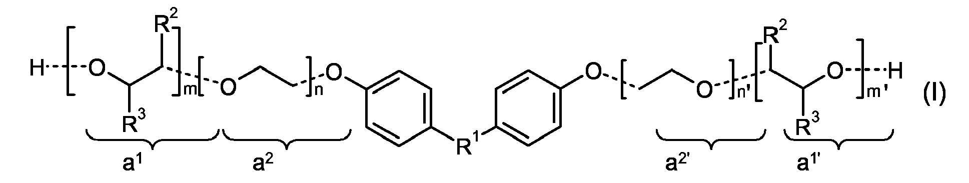 wobei R¹ = CH₂, CH(CH₃) oder C(CH₃)₂ darstellt,
R² = H und R³ = Methyl oder R² = Methyl und R³ = H darstellen, sowie
n+n'+m+m' = 1 bis 20, insbesondere n+n'+m+m' = 1 bis 8, sind, und die gestrichelte Linien darstellen, dass die Abfolge der aneinander gebundenen Alkylenglykol-Segmente a¹, a^{1'}, a² und a^{2'} variabel ist.

9. Zweikomponentige Polyurethanzusammensetzung gemäss Anspruch 8, **dadurch gekennzeichnet, dass** n=n'=0 ist.

10. Zweikomponentige Polyurethanzusammensetzung gemäss einer der vorhergehenden Ansprüche, **dadurch gekennzeichnet, dass** das aliphatische Triol **A2** ein Molekulargewicht von 360 bis 6000 g/mol, insbesondere von 160 bis 1700 g/mol besitzt.

11. Zweikomponentige Polyurethanzusammensetzung gemäss einer der vorhergehenden Ansprüche, **dadurch gekennzeichnet, dass** das Gewichtsverhältnis **A1/A2** zwischen 0.05 und 0.3 beträgt.

12. Zweikomponentige Polyurethanzusammensetzung gemäss einer der vorhergehenden Ansprüche, **dadurch gekennzeichnet, dass** das aromatische Diol **A1** in einer Menge von 2 bis 10 Gew.-%, bezogen auf die gesamte Zusammensetzung, vorhanden ist.

13. Zweikomponentige Polyurethanzusammensetzung gemäss einer der vorhergehenden Ansprüche, **dadurch gekennzeichnet, dass** das Volumenverhältnis von Komponente **K1** und **K2** zwischen 1:3 und 3:1, bevorzugt in etwa 1:1, beträgt.

14. Packung bestehend aus einer Verpackung mit zwei von einander getrennten Kammern und einer zweikomponentigen Polyurethanzusammensetzung gemäss einem der Ansprüche 1 bis 13, wobei in der einen Kammer die Polyolkomponente **K1** und in der anderen Kammer die Polyisocyanatkomponente **K2** vorhanden ist.

15. Verfahren zum Verkleben umfassend die Schritte
- Mischen der Komponenten **K1** und **K2** einer zweikomponentigen Polyurethanzusammensetzung gemäss einem der Ansprüche 1 bis 13,
- Applizieren der gemischten Polyurethanzusammensetzung auf mindestens eine der zu verklebenden Substratoberfläche,
- Fügen innerhalb der Offenzeit
- Aushärten der Polyurethanzusammensetzung.

16. Verfahren gemäss Anspruch 15, **dadurch gekennzeichnet, dass** das zu verklebende Substrat ein Metall, ein Kunststoff, ein Glas oder eine Keramik ist.

17. Verklebter Artikel, welcher nach einem Verfahren gemäss Anspruch 15 oder 16 verklebt wurde.

18. Verwendung einer zweikomponentigen Polyurethanzusammensetzung gemäss einem der Ansprüche 1 bis 13 als Klebstoff, insbesondere als struktureller Klebstoff.

19. Verwendung gemäss Anspruch 18 als Klebstoff für den Bau von Bauwerken, Automobilen, Fahrzeugen oder Schiffen.
